# DEMANDE DE BREVET EUROPEEN

(11) **EP 0 798 201 A2**
(43) Date de publication de la demande: **01.10.1997**
(21) Numéro de dépôt: 97104939.0
(22) Date de dépôt: 24.03.1997
(51) Int. Cl.: B62K 13/02

(54) **Vélo/trottinette de ville unisexe mono ou biplace**

(30) Priorité: 25.03.1996 US 621242
(71) Demandeur: Chartrand, Francois, Huntingdon, Quebec JOS 1H0 (CA)
(72) Inventeur: Chartrand, Francois, Huntingdon, Quebec JOS 1H0 (CA)
(74) Mandataire: Casalonga, Axel

(57) **Abrégé**

Un vélo/trottinette de ville unisexe mono ou biplace comprenant: un cadre (11); une fourche avant (22) assemblée montée sur le cadre par l'intermédiaire d'une connexion pivotante (14) qui pivote autour d'un premier axe pour guider le vélo/trottinette; une roue avant (25) montée à rotation sur la fourche avant assemblée par l'intermédiaire d'un second axe (26); une roue arrière (31) montée à rotation sur le cadre autour d'un troisième axe (32). La propulsion peut très bien être assurée, en position assise ou debout sur la ou les pédales (33,34,59,60), par la poussée d'un ou de plusieurs pieds en contact avec le sol ou par la rotation du mécanisme d'entraînement, coopérant avec les roues dentées ou à gorge avec empreinte, interposé entre la structure du siège (16) et la connexion pivotante (14). Afin que les pieds puissent rejoindre confortablement le sol et les pédales en position assise, les structures du siège (16), éloignées vers l'arrière, interposées entre le mécanisme d'entraînement et la roue arrière (31), sont fixes ou inclinables vers l'avant ou l'arrière et maintenues par les haubans (17) fixes ou inclinables. Les manivelles (35,36) et l'ensemble de manivelles s'étendent obliquement vers l'extérieur puis parallèlement au cadre. Une extrémité des manivelles (35,36) est pourvue de deux orifices filetés (37,38) pour fixer les pédales (33,34,59,60) selon la longueur des jambes. En mode biplace, des pédales intermédiaires (59,60) sont ajoutées si nécessaire. Deux poignées (44) supplémentaires conçues pour le portage sont fixées au cadre. Un mécanisme à ressort exercerait une tension sur l'élément entraîneur.

## Description

### 1. Domaine de l'invention:

La présente invention a pour objet divers modes de réalisation d'un vélo/trottinette de ville unisexe mono ou biplace comportant un grand nombre d'avantages tels que la position du cycliste, les méthodes de propulsion, le portage, les ajustements et l'entreposage comparativement au vélo conventionnel. L'invention est propulsée soit par les pédales (vélo) ou par la poussée d'un ou de plusieurs pieds en contact avec le sol (trottinette), le ou les autres pieds reposant sur le marchepied ou sur la ou les pédales en position assise ou debout. Sa conception compacte (ville) permet un braquage maximal et la position du cycliste assure une plus grande sécurité. Elle facilite également, au moyen d'une des deux poignées conçues à cette fin, le portage dans les endroits restreints tels que des escaliers, un corridor, un ascenseur, etc. L'espace libre au-dessus du mécanisme d'entraînement permet à tout cycliste (unisexe) d'enfourcher avec aisance l'invention ou d'en descendre. La propulsion est assurée par un (monoplace) ou deux cyclistes (biplace) en position assise ou debout.

### 2. Brève description de l'antériorité:

Le vélo conventionnel comporte de nombreux inconvénients par rapport au vélo/trottinette de ville unisexe mono ou biplace. Le vélo conventionnel ne permet pas à l'arrêt de poser fermement les pieds au sol en position assise pour maintenir l'équilibre lorsque la selle est ajustée à la hauteur appropriée par rapport aux pédales. Le vélo conventionnel ne peut être propulsé comme une trottinette en position assise en raison du positionnement du mécanisme d'entraînement. La longueur du vélo conventionnel complique le portage et l'entreposage, particulièrement dans les endroits restreints tels que des escaliers, un ascenseur ou le coffre d'une voiture. Le vélo conventionnel pour homme exige un effort à enfourcher ou pour en descendre.

Dans le cas de Mayn (5201538), la position de la roue arrière et du pédalier par rapport au cadre fait en sorte qu'il serait impossible d'opérer le vélo. De plus, un ressort au niveau de la fourche avant oblige un effort supplémentaire pour tourner le guidon. Le tube de selle n'est pas sécuritaire contre les chocs en raison du manque d'appui. La position du mécanisme d'entraînement par rapport au guidon fait en sorte qu'il serait impossible d'assurer la propulsion en position debout sur les pédales.

Dans le cas de Fried (2482472), la position élevée du mécanisme d'entraînement serait gênante pour les demoiselles et fait en sorte qu'il serait impossible d'assurer la propulsion en position debout sur les pédales. La position avancée du mécanisme d'entraînement par rapport à l'axe de la roue avant fait en sorte que le vélo bascule facilement vers l'avant lorsque la roue avant arrête brusquement.

Dans le cas de Buckler (5328194), l'invention comporte exactement les mêmes inconvénients que ceux de Fried (2482472), à l'exception de la position élevée du mécanisme d'entraînement. De plus, la position du guidon entre les jambes fait en sorte qu'il serait difficile de guider l'invention. Finalement, la hauteur élevée de la selle, de très petite dimension, occasionne les mêmes inconvénients que ceux du vélo conventionnel.

Objets de l'invention: un premier objet de la présente invention est de mettre au point un vélo/trottinette de ville unisexe mono ou biplace qui surmonte les obstacles de l'antériorité traités ci-dessus. Un deuxième objet de la présente invention est d'offrir une nouvelle conception sur l'art de la propulsion d'un vélo et sur le portage de celui-ci.

### 3. Sommaire de l'invention:

De manière plus précise, la présente invention a trait à un vélo/trottinette de ville unisexe mono ou biplace comprenant: un cadre; une fourche avant assemblée montée sur le cadre par l'intermédiaire d'une connexion pivotante qui pivote autour d'un premier axe pour guider le vélo/trottinette; une roue avant montée à rotation sur la fourche avant assemblée par l'intermédiaire d'un second axe; la roue avant comprenant un moyeu avant en rotation avec la roue avant autour du second axe et étant montée sur la fourche par l'intermédiaire du moyeu avant; une roue arrière montée à rotation sur le cadre autour d'un troisième axe, la roue arrière comprenant un moyeu arrière en rotation avec la roue arrière autour du troisième axe et étant montée sur le cadre par l'intermédiaire du moyeu arrière. La propulsion peut très bien être assurée, en position assise ou debout sur la ou les pédales, par la poussée d'un ou de plusieurs pieds en contact avec le sol ou par la rotation du mécanisme d'entraînement, coopérant avec les roues dentées ou à gorge avec empreinte, interposé entre la structure du siège et la connexion pivotante. Selon la présente invention, la structure du siège, soit soudée ou fixée au cadre, remplaçable par une autre structure de diverses longueurs et interposée entre le mécanisme d'entraînement et la roue arrière, est fixe ou inclinable vers l'avant ou l'arrière et maintenue par les haubans, fixes ou inclinables, fixés au cadre par l'intermédiaire de deux demi-axes transversaux.

Afin que les pieds puissent rejoindre confortablement le sol et les pédales en position assise, les structures du siège, éloignées du mécanisme d'entraînement, fixes ou inclinables, remplaçables par une autre structure de diverses longueurs, compatibles avec tous les modes et fixées au tube central par l'axe transversal lui-même fixé au support soudé au tube central, sont inclinables vers l'avant ou l'arrière et maintenues par les haubans inclinables pivotant de l'extrémité inférieure autour des deux demi-axes transversaux, situés aux pattes arrière, un de chaque côté de la roue arrière. De l'extrémité supérieure, les haubans sont fixés au collet qui se déplace verticalement et se serre au moyen d'une attache sans toutefois obstruer le mouvement horizontal de l'élément du siège coulissant à l'intérieur de la structure du siège. De façon plus précise, en position assise le cycliste peut avec aisance poser l'un ou l'autre des pieds au sol ou allonger les jambes vers les pédales.

Le mécanisme d'entraînement, composé de roues dentées ou à gorge avec empreinte, comprend un moyen permettant d'entraîner la roue arrière composée de l'organe entraîneur en rotation avec la roue arrière comprenant elle-même des roues dentées ou à gorge avec empreinte centrées sur le troisième axe et actionnées par l'intermédiaire du mécanisme d'entraînement. L'élément entraîneur de la roue à boucle fermée comprend une bande souple ou une longueur flexible d'anneaux liés entre eux mettant en liaison les roues dentées ou à gorge avec empreinte de la roue arrière et du mécanisme d'entraînement. Le deuxième et troisième axes des roues sont parallèles au mécanisme d'entraînement qui repose dans au moins un plan, à la connexion pivotante et à la structure du siège reposant également dans ce plan, et est interposé entre la structure du siège et la connexion pivotante, éloigné sur le plan vertical de la connexion pivotante, plus précisément sur le plan horizontal approximativement à la hauteur de l'axe de la roue avant et éloigné sur le plan vertical du guidon.

Pour réduire le ballottement et les contacts avec le protège-jambe, un mécanisme à ressort peut être fixé sur le cadre près de la roue arrière pour exercer une tension constante, dans un plan latéral, sur l'élément entraîneur de la roue à boucle fermée.

Les manivelles s'étendent obliquement vers l'extérieur puis parallèlement au cadre et/ou l'ensemble de manivelles du mécanisme d'entraînement s'étend transversalement, obliquement vers l'extérieur puis parallèlement au cadre. La forme prononcée des manivelles permet une réduction de l'irritation du périnée en raison de l'écartement des jambes et de la longueur totale en raison du rapprochement de la roue avant et du mécanisme d'entraînement.

Une extrémité des manivelles est pourvue de deux orifices filetés chacune pour fixer les pédales selon la longueur des jambes, prévoyant ainsi les longueurs de jambes inégales.

En mode biplace, un ensemble de pédales intermédiaires coaxiales et adjacentes est interposé entre les manivelles ou l'ensemble de manivelles et les pédales conventionnelles. La pédale intermédiaire est pourvue d'un orifice à son extrémité extérieure pour recevoir la pédale conventionnelle. Chaque cycliste pédale toujours avec aisance en raison de l'angle approprié de la pédale sous son pied.

En mode biplace, l'unique mécanisme d'entraînement est interposé entre la deuxième structure du siège, située à l'avant de la première structure du siège, et la connexion pivotante. La deuxième structure du siège est munie à l'intérieur de son extrémité supérieure d'un élément du siège conçu pour recevoir soit un siège, un fauteuil porte-bébé, un porte-bagage ou un panier pour animal ou effets personnels.

Les pédales s'utilisent pour la rotation du mécanisme d'entraînement et aussi comme marchepied. Un pied sur la pédale, le vélo/trottinette est propulsé par la poussée de l'autre pied en contact avec le sol. Un marchepied trapézoïdal est fixé si nécessaire, près du sol, au(x) tube(s) central/centraux entre le mécanisme d'entraînement et la structure du siège.

Le vélo/trottinette est propulsé en mode vélo par la rotation des pédales ou en mode trottinette par la poussée du/des pieds en contact avec le sol. La propulsion du vélo/trottinette est assurée en position assise ou debout soit par la poussée d'un ou de plusieurs pieds en contact avec le sol, soit par la rotation du mécanisme d'entraînement.

Deux poignées supplémentaires, en plus des deux poignées du guidon, l'une interposée entre les extrémités de la structure du siège, l'autre interposée entre les extrémités du tube de force oblique, situées plus précisément au-dessus du protège-jambe, sont conçues spécifiquement pour le portage.

L'invention consiste en une nouvelle conception sur l'art de la propulsion d'un vélo et sur le portage de celui-ci; tous les organes et éléments statiques et dynamiques reposant dans au moins un plan et en parallèle de ce plan respectif dans lequel repose le mécanisme d'entraînement, les organes directionnels et les structures du siège pourvues de poignées pour le portage.

Ces objets, avantages et autres caractéristiques de la présente invention deviendront plus évidents en lisant la description non restrictive suivante des modes préférés de réalisation du vélo/trottinette de ville unisexe mono ou biplace, donnée à titre d'exemple seulement en regard des dessins d'accompagnement.

### 4. Brève description des dessins:

Dessins annexés:
Figure 1 représente une vue en élévation latérale de la référence 10;
Figure 2 représente une vue de dessus du cadre 11;
Figure 3 représente une vue en élévation latérale d'une manivelle;
Figure 3b représente une vue de dessus d'une manivelle;
Figure 4 représente une vue en élévation latérale du cadre 11 du vélo/trottinette de ville unisexe monoplace de la figure 1 soulevé en mode portage et positionné pour monter des escaliers;
Figure 5 représente une vue en élévation latérale de la référence 50;
Figure 6 représente une vue de dessus du cadre 51;
Figure 7 représente une vue en élévation latérale de la référence 70;
Figure 8 représente une vue de dessus de la référence 70;
Figure 9 représente une comparaison entre la référence 10 de la figure 1, le vélo conventionnel 200 et le vélo allongé 300 vus en élévation latérale, le vélo/trottinette de ville unisexe monoplace étant le plus court.

### 5. Description détaillée des modes préférés de réalisation:

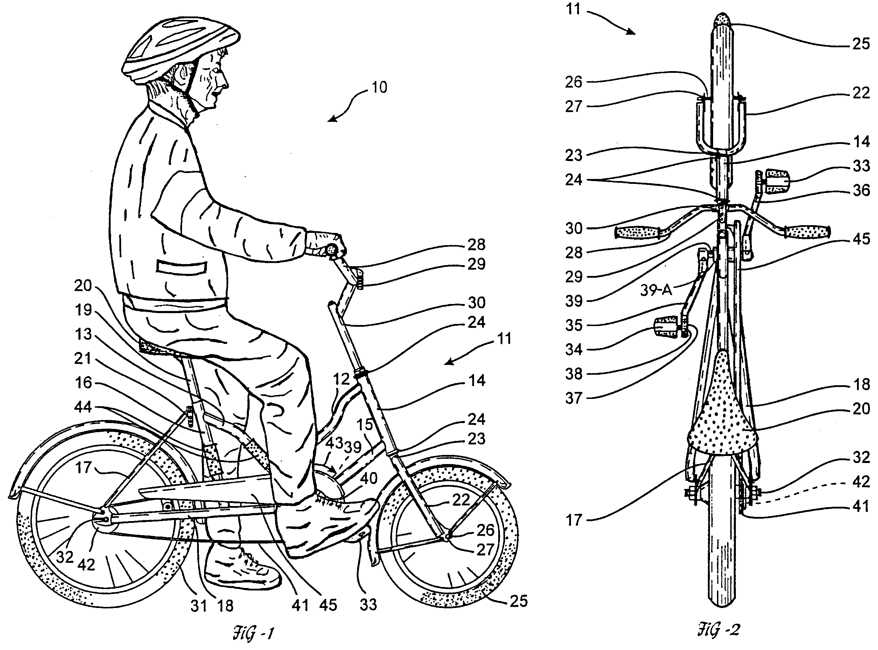

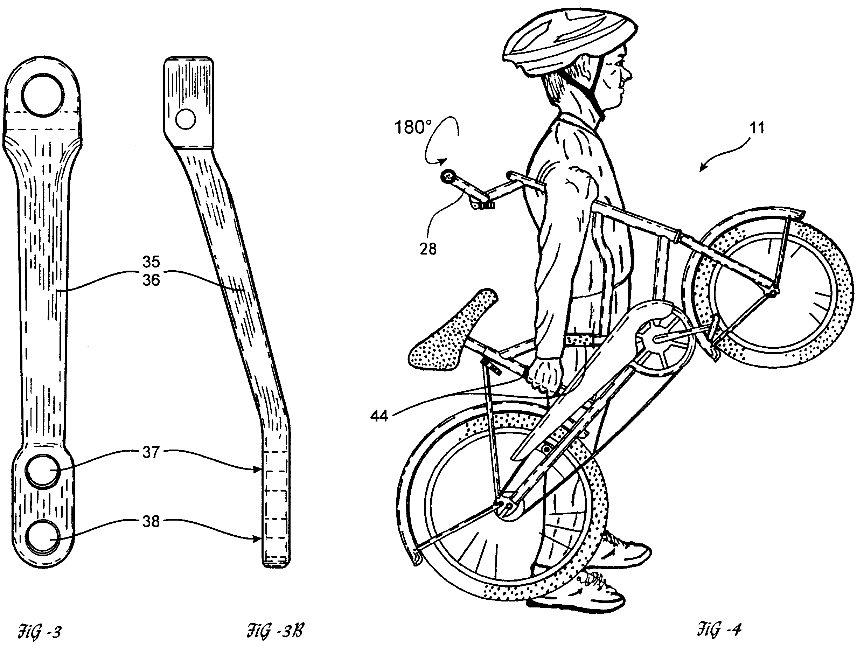

Tel qu'illustré par les figures 1-9 des dessins annexés, le premier mode de réalisation du vélo/trottinette de ville unisexe monoplace, identifié en général par la référence 10 comprend un cadre spécifique à ce nouveau vélo/trottinette de ville unisexe monoplace 11 composé d'organes statiques et dynamiques tels qu'un tube horizontal oblique 12 soudé à la partie supérieure de la connexion pivotante 14 et an tube de force oblique 13 qui se dirige de la structure du siège 16 vers la boîte du mécanisme d'entraînement 39-A, un tube diagonal 15, une structure du siège 16, des haubans tels que 17 et des bases telles que 18. Un élément du siège 19 glissant dans la structure du siège 16 peut être fixé à une position longitudinale particulière dans cette structure de façon à ce que la hauteur du siège 20, fixé à l'extrémité supérieure libre de l'élément du siège 19, peut être ajustée au besoin. Une attache appropriée 21 bloque l'élément 19 dans la structure du siège 16 lorsque le siège 20 atteint la position souhaitée.

Une fourche avant 22 comprend une tige 23 montée en pivot dans la connexion pivotante 14 par l'intermédiaire de roulements à bille 24. Une roue avant 25 comprend un moyeu central avant (non illustré) monté à rotation sur un axe avant 26 par l'intermédiaire de deux écrous tels que 27. Le guidon 28, maintenu par une attache appropriée 29, est fixé à l'extrémité supérieure de la potence 30 pour permettre au cycliste de guider le vélo/trottinette 10 en tournant la fourche 22 par l'intermédiaire de la connexion pivotante 14 qui comprend les roulements 24 et la potence 30.

Une roue arrière 31 est montée à rotation entre l'intersection latérale droite du siège et de la base et l'intersection latérale gauche du siège et de la base. Par convention, la roue arrière 31 est montée sur le cadre 11 du vélo/trottinette 10 par l'intermédiaire d'un moyeu (non illustré) tournant autour d'un axe 32 par l'intermédiaire de roulements à bille bien connus (non illustrés).

Le vélo/trottinette peut être actionné par divers organes de transmission comprenant deux pédales 33 et 34, deux manivelles courbées vers l'extérieur 35 et 36, pourvues chacune de deux orifices filetés 37 et 38 pour fixer les pédales selon la longueur des jambes du cycliste, un mécanisme d'entraînement 39, un ensemble de roues dentées ou à gorge avec empreinte coaxiales adjacentes latéralement 40 de grandeurs appropriées, un élément entraineur 41 à boucle fermée s'étendant du mécanisme d'entraînement 39 à la roue arrière 31 et pouvant être tendu par un mécanisme à ressort (non illustré) pour exercer une tension constante dans un plan latéral et pour réduire le ballottement et les contacts avec le protège-jambe fixé au cadre près de la roue arrière composée d'un ensemble de roues dentées ou à gorge avec empreinte 42 conçu spécifiquement pour entraîner la roue arrière 31. Les pédales 33 et 34 sont actionnées par les deux pieds du cycliste pour faire tourner le mécanisme d'entraînement 39 dans la direction 43 par l'intermédiaire des deux manivelles 35 et 36. La propulsion est assurée par l'ensemble menant de roues dentées ou à gorge avec empreinte 40, monté sur l'axe 39, qui met en rotation l'élément entraîneur 41 de la roue à boucle fermée coopérant avec l'ensemble mené de roues dentées ou à gorge avec empreintes 42 monté sur la roue libre (non illustrée) par lequel le moyeu de la roue arrière 31 est monté sur l'axe 32. L'entraînement de l'élément entraîneur 41 de la roue à boucle fermée occasionne donc la rotation de l'ensemble mené des roues dentées ou à gorge avec empreinte de grandeurs appropriées 42, actionnant ainsi la roue arrière 31 par la roue libre et le moyeu arrière. Bien connu de l'homme de l'art, la roue libre permettra à la roue arrière 31 à continuer de tourner lorsque la rotation des manivelles 35 et 36 et en conséquence l'entraînement de l'ensemble menant 40 sont interrompus.

La structure de la référence 10 décrite ci-dessus est en général conventionnelle et supposée tout à fait compréhensible par l'homme de l'art;
sauf la boîte du mécanisme d'entraînement 39-A positionnée éloignée vers l'avant de la structure du siège 16, les manivelles largement courbées vers l'extérieur 35 et 36 pourvues chacune de deux orifices filetés 37 et 38, un ensemble de roues dentées ou à gorge avec empreinte coaxiales adjacentes latéralement 40 de grandeurs appropriées, un mécanisme à ressort (non illustré) pour exercer une tension constante dans un plan latéral sur l'élément entraîneur, un tube horizontal oblique 12, un tube de force oblique 13 de même que les angles de chasse et de la connexion pivotante allongée 14 qui diffèrent du vélo conventionnel. Par conséquent, la structure ne sera pas approfondie davantage dans la présente spécification. De plus, les mécanismes faisant passer l'élément entraîneur 41 de la roue à boucle fermée d'un organe entraîneur à l'autre 42, du mécanisme d'entraînement 39 à la roue arrière 31, de même que les mécanismes de freinage sont bien connus de l'homme de l'art et ne seront pas décrits dans cette spécification.

La présente invention de la référence 10 sera maintenant décrite.

La boîte du mécanisme d'entraînement 39-A éloignée vers l'avant de la structure du siège 16 est installée à l'extrémité des bases 18 transversalement et parallèlement à l'axe de la roue arrière 31 et interposée approximativement entre la connexion pivotante 14 et la structure du siège 16 en plus d'être soudée au tube diagonal 15 et au tube de force oblique 13. Contrairement au vélo conventionnel, la boîte du mécanisme d'entraînement 39-A n'est donc pas soudée sous la structure du siège 16. Les bases 18 sont soudées d'une extrémité à la boîte du mécanisme d'entraînement 39-A et de l'autre extrémité aux pattes de la roue arrière 31.

L'extrémité inférieure de la structure du siège 16 soudée à l'intersection centrale des bases 18 est interposée approximativement entre la boîte du mécanisme d'entraînement 39-A et la roue arrière 31. L'extrémité supérieure de la structure du siège 16 est soudée du côté frontal au tube de force oblique 13 et maintenue du côté opposé par les haubans. Contrairement au vélo conventionnel, la structure du siège 16 n'est pas située au-dessus de la boîte du mécanisme d'entraînement 39-A et le tube de force oblique 13 soudé à une extrémité à la structure du siège 16 n'est pas relié de l'autre extrémité à la connexion pivotante 14 mais plutôt à la boîte du mécanisme d'entraînement 39-A. À l'arrêt, la position de la structure du siège 16 permet de poser un ou plusieurs pieds au sol afin de maintenir l'équilibre. En marche, les jambes sont allongées pour permettre une bonne circulation sanguine. La position assise élimine la pression sur les mains au niveau du guidon et permet de maintenir la tête haute.

En effet, tel qu'illustré par les figures 1-3b des dessins annexés, les manivelles 35 et 36 s'étendent latéralement vers l'extérieur du cadre, ensuite obliquement vers l'extérieur puis finalement parallèlement au cadre pour libérer un champ d'action pour la roue avant 25 lors du braquage vers la gauche ou la droite. La forme courbée des manivelles 35 et 36 réduit également l'irritation du périnée en raison de l'écartement des jambes.

Les deux orifices adjacents et filetés 37 et 38 à l'extrémité de la manivelle 35 ou 36 permettent de fixer la pédale 33 ou 34 à l'endroit approprié selon la longueur des jambes du cycliste. Ce système pourrait également accommoder le cycliste dont l'une jambe est plus courte que l'autre. La pédale 33 pourrait, par exemple, être fixée à l'endroit fileté 37 de la manivelle 35 et l'autre pédale 34 pourrait être fixée à l'endroit fileté 38 de la manivelle 36.

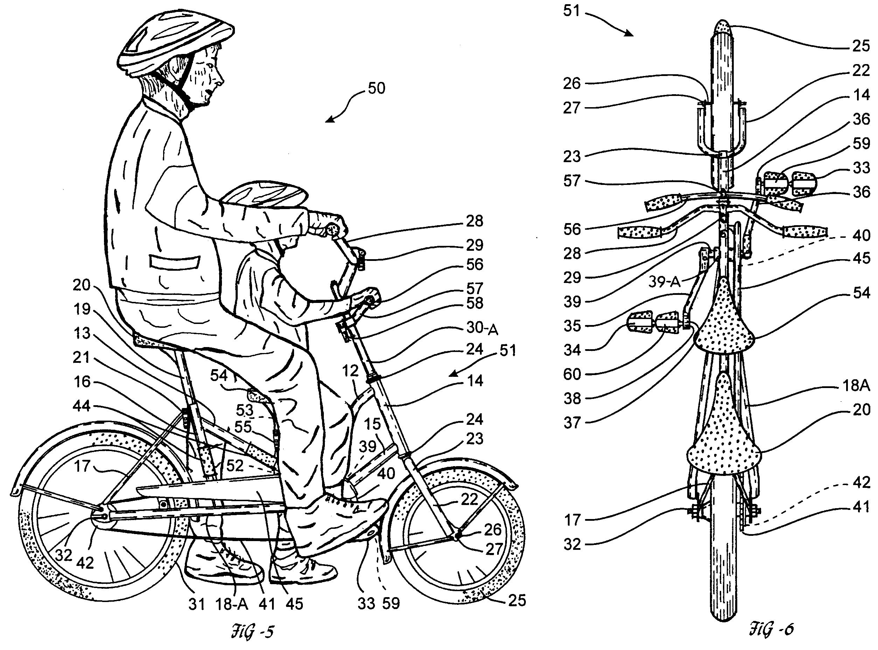

Dans le mode de réalisation 10, figure 1, selon la présente invention, deux poignées conçues pour le portage 44 sont prévues, l'une fixée à la structure du siège 16 entre le tube de force oblique 13 et l'intersection des bases 18 et l'autre fixée au tube de force oblique 13 au-dessus du protège-jambe 45. La figure 4 illustre un cycliste qui porte d'une main le vélo/trottinette lors de déplacements horizontaux ou de la montée d'une déclivité dans le but de franchir divers obstacles tels que des escaliers, un corridor, un ascenseur ou autres. Il suffit que le guidon 28 soit tourné de 180°, de se placer latéralement et perpendiculairement à l'axe longitudinal de façon à ce que la pédale 34 soit située devant le cycliste, de passer le bras devant la connexion pivotante 14 et d'agripper la poignée 44 fixée à la structure du siège 16 ou au tube de force oblique 13 pour soulever le vélo/trottinette. Pour descendre des escaliers, il suffit que le guidon 28 soit tourné de 180°, de se placer latéralement et perpendiculairement à l'axe longitudinal de façon à ce que la pédale 34 soit située derrière le cycliste et puis de passer le bras devant la connexion pivotante 14 et d'agripper la poignée 44 fixée à la structure du siège 16 ou au tube de force oblique 13 pour soulever le vélo/trottinette. La potence 30 du guidon 28 se localise sous l'aisselle pour stabiliser le vélo/trottinette une fois le guidon 28 tourné de 180°. Le vélo/trottinette se porte aussi bien de la main droite que de la main gauche. Pour l'entreposage et le portage, il s'agit de tourner les éléments de la connexion pivotante 14 composée du guidon 28, de la potence 30, de la fourche avant 22 et évidemment de la roue avant 25, raccourcissant ainsi le vélo/trottinette en raison de l'angle de chasse. Le cycliste place sous l'aisselle la potence 30 et agrippe la poignée 44 de la structure du siège 16 ou du tube de force oblique 13 pour soulever le vélo/trottinette. Pour monter des escaliers, le cycliste et la roue avant se dirigent vers l'avant. Pour descendre, le cycliste et la roue arrière se dirigent vers l'avant.

La structure de la référence 50 est en général la même que le mode de réalisation 10, et en conséquence il n'est pas jugé nécessaire de la décrire de nouveau. Seulement les altérations sont décrites et les pièces correspondantes portent les mêmes références.

Une première différence réside dans le mode biplace. Le cadre 51 est composé d'une deuxième structure du siège 52-54 soudée à l'extrémité inférieure des bases 18-A et interposée approximativement entre la boîte du mécanisme d'entraînement 39-A et la première structure du siège 16 de façon à ce que les pieds puissent rejoindre les pédales ou le sol pour maintenir l'équilibre lors d'un arrêt ou de toute autre circonstance. Deux cyclistes de même taille (non illustré) ou de différentes tailles (figure 5) s'orientent dans une même direction et partagent l'effort de la rotation du mécanisme d'entraînement 39, chacun sur leur siège respectif ajustable à la verticale et positionné de façon à ce que les pieds puissent rejoindre les pédales 33-34 et les pédales intermédiaires 59-60 ou le sol tout en demeurant assis. Un siège pour enfant 54, un fauteuil porte-bébé, un porte-bagages ou un panier pour animal ou effets personnels peut être monté sur l'élément du siège 53 de la deuxième structure du siège 52.

Pour réaliser le mode biplace de la référence 50 à partir du mode de réalisation 10, les bases 18 sont allongées et identifiées par les bases 18-A, l'extrémité inférieure de la deuxième structure du siège 52 étant soudée à l'intersection centrale des bases 18-A, l'extrémité supérieure demeurant libre. Un tube horizontal oblique 12 et un tube de force oblique 13 sont interposés entre les extrémités de la deuxième structure du siège 52. La deuxième structure du siège 52 est interposée entre la première structure du siège 16 et la boîte du mécanisme d'entraînement 39-A et soudée de son extrémité supérieure du côté frontal au tube horizontal oblique 12 et du côté opposé au tube de force oblique 13, soit approximativement au centre de la deuxième structure du siège 52.

Un élément du siège 53 glisse dans la structure du siège 52 et peut se fixer à une position longitudinale particulière dans ce tube de façon à ce que la hauteur du siège 54, fixé à l'extrémité supérieure libre de l'élément du siège 53, petit être ajustée au besoin. Une attache appropriée 55 bloque l'élément 53 dans le tube 52 lorsque le siège 54 atteint la position souhaitée.

Au besoin un deuxième guidon 56 peut être installé au niveau de la potence secondaire 57, elle-même fixée à la potence primaire 30-A maintenue à la position désirée au moyen de l'attache 58.

Tel qu'illustré par la figure 6, les manivelles 35 et 36 peuvent recevoir deux pédales chacune. Les deux pédales intermédiaires 59 et 60 se fixent directement aux manivelles 35 et 36 aux endroits filetés 37 ou 38. Les pédales intermédiaires 59 et 60 sont pourvues d'une extrémité d'une tige filetée et de l'autre extrémité d'un orifice fileté conçu pour recevoir les pédales 33 et 34. Étant donné que chaque pédale possède ses roulements intégraux, chaque cycliste pédale toujours avec aisance en raison de l'angle approprié des pédales 33-34 et des pédales intermédiaires 59-60 sous son pied.

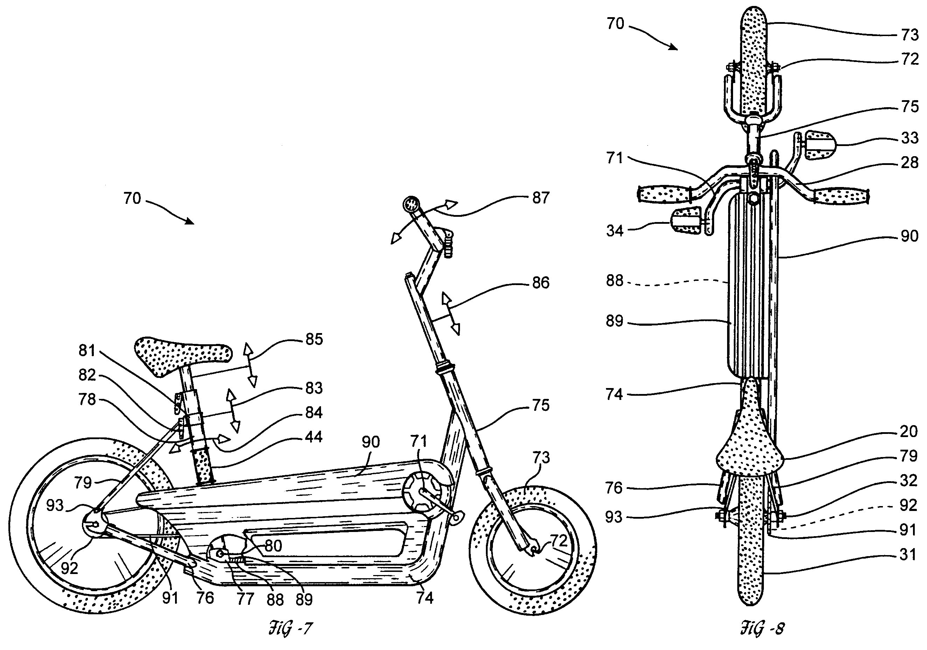

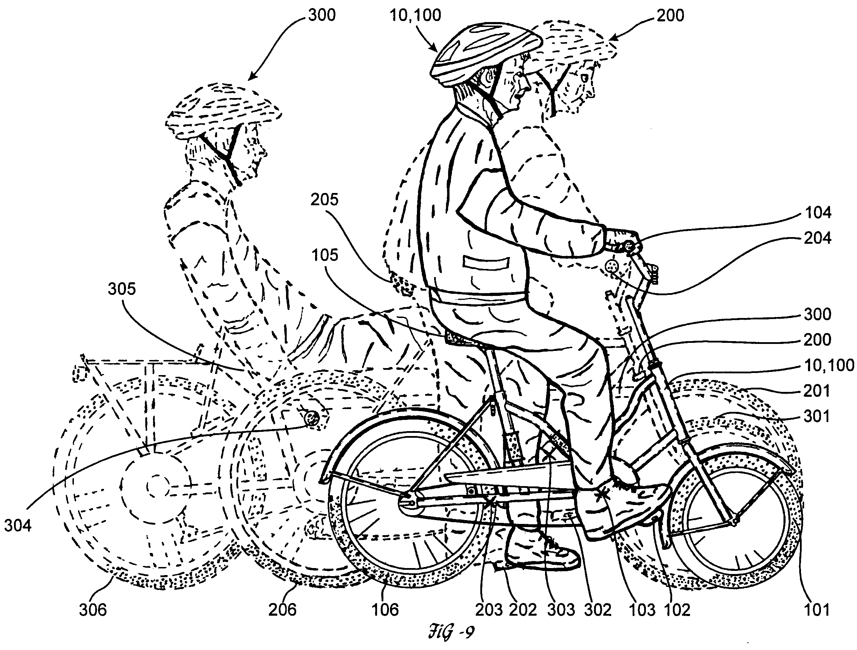

La référence 70 du vélo/trottinette de la présente invention sera maintenant décrite en regard des figures 7 et 8 des dessins annexés. Il faut noter que le mécanisme d'entraînement 71 se situe environ sous le guidon, et non éloigné vers l'arrière comme les références 10 et 50, interposé entre l'axe de la roue avant 72 et la structure du siège 78, tenant compte du diamètre de la roue avant 73 et de la longueur de l'ensemble des manivelles du mécanisme d'entraînement 71. Il faut noter également que la propulsion se réalise en position assise ou debout soit par la poussée d'un ou de plusieurs pieds en contact avec le sol, soit par la rotation du mécanisme d'entraînement 71. Un seul tube central 74 soudé à une extrémité à la connexion pivotante 75 descend entre le mécanisme d'entraînement 71 et la roue avant 73 près du sol pour enfin se diriger vers l'arrière. À l'autre extrémité, le tube central 74 est recourbé vers le haut et soudé aux bases 76 placées à la même inclinaison. Près de cette même extrémité, deux supports 77 sont soudés l'un de chaque côté du tube central 74.

La structure du siège inclinable 78 est fixée d'une extrémité aux supports 77 qui pivotent par l'intermédiaire de l'axe 80 parallèle à l'axe de la roue arrière 31, pour permettre un ajustement du siège comme indique la flèche 84. De l'autre extrémité, les haubans inclinables 79 sont fixés à la structure du siège inclinable 78 par l'intermédiaire d'un collet 81 qui serre la structure du siège 78 au moyen de l'attache 82. L'extrémité inférieure des haubans inclinables 79 est fixée aux pattes arrière par l'intermédiaire de deux demi-axes transversaux 93. Lorsque le collet 81 est desserré au moyen de l'attache 82, le collet 81 peut glisser librement comme l'indique la flèche 83, soit vers le haut pour éloigner la structure du siège 78 du mécanisme d'entraînement 71 ou vers le bas pour approcher la structure du siège 78 du mécanisme d'entraînement 71. Une fois positionné à la hauteur appropriée, le collet 81 est serré au moyen de l'attache 82 pour immobiliser la structure du siège 78 afin que les pieds puissent rejoindre confortablement le sol et les pédales 33 et 34 en position assise; la structure du siège 78 peut être substituée par une autre de longueurs variables. La flèche 85 indique le déplacement de l'élément du siège. La flèche 86 indique le déplacement de la potence. La flèche 87 indique la rotation du guidon.

Pour permettre la pratique du mode de réalisation 70 des figures 7 et 8, un marchepied trapézoïdal 88 est fixé au tube central 74, plus précisément interposé entre la structure du siège 78 et le tube de direction 75, et est recouvert d'une membrane antidérapante 89.

Un protège-jambe 90 recouvre de chaque côté l'élément entraîneur 91 de la roue à boucle fermée. La trajectoire de l'élément entraîneur 91 de la roue à boucle fermée pourrait facilement se diriger dans un autre sens que celui indiqué dans la figure 7 (non illustrée). À partir du mécanisme d'entraînement 71, l'élément entraîneur 91 pourrait descendre vers le bas, contourner une roue dentée ou à gorge avec empreinte fixée à l'avant du tube central 74, se diriger ensuite en ligue droite jusqu'à l'organe entraîneur 92 de la roue arrière pour ensuite revenir vers l'avant et contourner une autre roue dentée ou à gorge avec empreinte fixée à l'avant du tube central 74 et remonter vers le haut jusqu'au mécanisme d'entraînement 71 pour ainsi fermer la boucle. Le protège-jambe couvrirait le mécanisme d'entraînement 71 pour ensuite descendre vers le bas à la hauteur du marchepied 88 et des roues dentées ou à gorge avec empreinte et finalement se diriger vers la roue arrière. L'élément entraîneur 91 de la roue à boucle fermée est évidemment protégé des deux côtés par le protège-jambe. Cette nouvelle position offrirait plus d'espace entre la structure du siège 78 et le mécanisme d'entraînement 71, soit approximativement au niveau du tube central 74.

Deux autres modes connus, le vélo conventionnel 200 et le vélo allongé 300, sont comparés à la référence 10 identifiée par le chiffre 100 dans la figure 9. Les trois roues avant des vélos sont alignées. Les trois roues arrière des vélos démontrent bien la différence de longueur entre les vélos.

Le mode 100, vélo/trottinette de ville unisexe monoplace, comprend la roue avant 101, la pédale du côté droit 102, le centre du mécanisme d'entraînement 103 identifié par un X sur le pied droit du cycliste, le guidon 104, le siège 105 et la roue arrière 106.

Le mode 200, vélo conventionnel, comprend la roue avant 201, la pédale du côté droit 202, le centre du mécanisme d'entraînement 203 identifié par un X sur la roue arrière 106, le guidon 204, le siège 205 et la roue arrière 206.

Le mode 300, vélo allongé, comprend la roue avant 301, la pédale du côté droit 302, le centre du mécanisme d'entraînement 303 identifié par un X derrière le mollet du cycliste du vélo/trottinette 100, le guidon 304, le siège 305 et la roue arrière 306.

Il est à noter que les trois mécanismes d'entraînement 103, 203 et 303, de même que les guidons 104 et 204 et les sièges 105 et 205 sont situés dans un rayon près l'un de l'autre. Par contre, le guidon 304 et le siège 305 sont très éloignés par rapport à ceux des vélos 100 et 200. La longueur supérieure des modes 200 et 300 est très apparente. Une réduction de la longueur des modes 200 et 300 passe inévitablement par le mode 100. Il faut également souligner que la position des cyclistes des modes 200 et 300 diffère énormément à celle du cycliste du mode 100.

## Revendications

1. Un vélo/trottinette de ville unisexe mono ou biplace (fig - 1) comprenant:
un cadre (11);
une fourche avant (22) assemblée montée sur ledit cadre par l'intermédiaire d'une connexion pivotante (14) qui pivote autour d'un premier axe pour guider ledit cadre;
une roue avant (25) montée à rotation sur ladite fourche avant assemblée par l'intermédiaire d'un second axe (26);
une roue arrière (31), montée à rotation sur ledit cadre autour d'un troisième axe (32), actionnée par l'intermédiaire d'un élément entraîneur (42) de ladite roue arrière et d'un mécanisme d'entraînement (39) composé de manivelles (35, 36) et de pédales (33, 34) montées sur un axe transversal (39) à l'intérieur d'une boîte du mécanisme d'entraînement (39-A) interposé entre une structure du siège (16) et ladite connexion pivotante (14) et situé à l'extrémité des bases (18), d'un tube de force oblique (13) et d'un tube diagonal (15);
un tube horizontal oblique (12) soudé à ladite connexion pivotante (14) et audit tube de force oblique (13) soudé à ladite boîte du mécanisme d'entraînement (39-A) et à ladite structure du siège (16) soudée de son extrémité inférieure auxdites bases (18) et de son extrémité supérieure du côté frontal audit tube de force oblique (13) et du côté opposé aux haubans (17);
par lequel un déplacement est obtenu soit par la poussée d'un pied en contact avec le sol, soit par la rotation dudit mécanisme d'entraînement (40) en position assise ou debout, soit par le portage au moyen d'une poignée (44) fixée sur ladite structure du siège (16).

2. Un vélo/trottinette de ville unisexe mono ou biplace (fig - 5) comprenant:
un cadre (51);
une fourche avant (23) assemblée montée sur ledit cadre par l'intermédiaire d'une connexion pivotante (14) qui pivote autour d'un premier axe pour guider ledit cadre;
une roue avant (25) montée à rotation sur ladite fourche avant assemblée par l'intermédiaire d'un second axe (26);
une roue arrière (31), montée à rotation sur ledit cadre autour d'un troisième axe (32), actionnée par l'intermédiaire d'un élément entraîneur (42) de ladite roue arrière et d'un unique mécanisme d'entraînement (39) composé de manivelles (35, 36) et de quatre pédales (33, 34, 59, 60) montées sur un axe (39) à l'intérieur d'une boîte du mécanisme d'entraînement (39-A) interposé entre une deuxième structure du siège (52) et ladite connexion pivotante (14) et situé à l'extrémité des bases (18-A) et d'un tube diagonal (15);
un tube horizontal oblique (12) soudé à ladite connexion pivotante et à ladite deuxième structure du siège soudée auxdites bases;
une première structure du siège (16) interposée entre ladite roue arrière (31) et ladite deuxième structure du siège (52);
par lequel un déplacement est obtenu soit par la poussée d'un ou de plusieurs pieds en contact avec le sol, soit par la rotation de ledit unique mécanisme d'entraînement (40), soit par le portage au moyen d'une poignée (44) fixée sur ladite première structure du siège (16).

3. Un vélo/trottinette de ville unisexe mono ou biplace (fig - 7) comprenant:
un cadre (70);
une fourche avant assemblée montée sur ledit cadre par l'intermédiaire d'une connexion pivotante (75) qui pivote autour d'un premier axe pour guider ledit cadre;
une roue avant (73) montée à rotation sur ladite fourche avant assemblée par l'intermédiaire d'un second axe;
une roue arrière (31), montée à rotation sur ledit cadre (74) autour d'un troisième axe (32), actionnée par l'intermédiaire d'un élément entraîneur (92) de ladite roue arrière et d'un mécanisme d'entraînement (71) composé d'un ensemble de manivelles et de pédales (33, 34) montées sur un axe à l'intérieur d'une boîte du mécanisme d'entraînement interposée entre une structure du siège inclinable (78) pourvue de deux supports (77) et d'un axe transversal (89) pour pivoter ladite structure du siège inclinable (78) vers l'avant ou l'arrière (84) et un tube central (74);
une deuxième structure du siège (52) pourvue d'un élément du siège (53) conçu pour recevoir soit un siège (54), un fauteuil porte-bébé, un porte-bagage, un panier pour animal ou effets personnels.
un marchepied (89) de forme trapézoïdale recouvert d'une membrane antidérapante fixé au-dessus dudit tube central (74);
par lequel un déplacement est obtenu soit par la poussée d'un ou de plusieurs pieds en contact avec le sol, soit par la rotation dudit mécanisme d'entraînement (71), soit par le portage au moyen d'une poignée (44) fixée à ladite structure du siège inclinable (78).

4. Un vélo/trottinette de ville unisexe mono ou biplace, selon l'une quelconque des revendications précédentes, caractérisé en ce que ledit élément entraîneur (41) de la roue à boucle fermée est composé soit d'une longueur flexible d'anneaux liés entre eux, soit d'une bande souple.

5. Un vélo/trottinette de ville unisexe mono ou biplace, selon l'une quelconque des revendications précédentes, caractérisé en ce que ledit mécanisme d'entraînement (40) est pourvu d'organes entraîneurs, soit des roues dentées, soit une roue à gorge avec empreinte.

6. Un vélo/trottinette de ville unisexe mono ou biplace, selon l'une quelconque des revendications précédentes, caractérisé en ce que deux orifices adjacents et filetés (37, 38) sont situés à l'extrémité de chacune desdites manivelles (35, 36) et dudit ensemble de manivelles (71).

7. Un vélo/trottinette de ville unisexe mono ou biplace, selon la revendication 2, caractérisé en ce que lesdites quatre pédales (33, 34, 59, 60) comprennent deux pédales intermédiaires (59, 60) pourvues d'une extrémité d'une tige filetée et de l'autre extrémité d'un orifice fileté.

8. Un vélo/trottinette de ville unisexe mono ou biplace, selon la revendication 2, caractérisé en ce que ladite deuxième structure du siège (52) est interposée entre ladite première structure dit siège (16) et ladite boîte du mécanisme d'entraînement (39-A) et soudée de son extrémité supérieure d'un côté frontal audit tube horizontal oblique (12) et du côté opposé audit tube de force oblique (13), soit approximativement au centre de ladite deuxième structure du siège.

9. Un vélo/trottinette de ville unisexe mono ou biplace, selon la revendication 3, caractérisé en ce que ledit cadre (70) est pourvu d'haubans inclinables (79) fixés de leur extrémité inférieure aux pattes arrière par l'intermédiaire de deux demi-axes transversaux (93).

10. Un vélo/trottinette de ville unisexe mono ou biplace, selon la revendication 3, caractérisé en ce que ladite structure du siège inclinable (78) est maintenue stable de son extrémité supérieure par un collet (81) relié auxdits haubans inclinables (79) par l'intermédiaire d'une attache (82).
